# EUROPÄISCHE PATENTSCHRIFT

(11) **EP 3 807 498 B1**
(45) Veröffentlichungstag und Bekanntmachung des Hinweises auf die Patenterteilung: **15.01.2025**
(21) Anmeldenummer: 19742675.2
(22) Anmeldetag: 11.06.2019
(51) Int. Cl.: F01D 21/00, G01M 15/02, G01M 15/14, G02B 23/24, B25J 19/02, B25J 15/00, B25J 15/02, G01N 22/02, G01N 23/00, G01N 25/72, G01N 27/00, G01N 29/04

(54) **INSPEKTIONSVERFAHREN UND SYSTEM**
INSPECTION METHOD AND SYSTEM
PROCÉDÉ D'INSPECTION ET SYSTÈME

(30) Priorität: 14.06.2018 DE 102018209609
(43) Veröffentlichungstag der Anmeldung: 21.04.2021
(73) Patentinhaber: MTU Aero Engines AG, 80995 München (DE)
(72) Erfinder: HEINZELMAIER, Christian, 82178 Puchheim (DE); KRIEGL, Bernd, 82140 Olching (DE)
(86) Internationale Anmeldenummer: PCT/DE2019/000160
(87) Internationale Veröffentlichungsnummer: WO 2019/238152

(56) Entgegenhaltungen:
- EP-A1- 3 171 166
- DE-A1- 102006 048 791
- DE-A1- 102016 224 049
- DE-T5- 112014 000 505
- JP-A- H07 270 261
- US-A- 4 139 822
- US-A- 5 301 061
- US-A1- 2004 051 525
- US-A1- 2012 158 319
- US-A1- 2014 260 755
- US-A1- 2014 360 289
- US-A1- 2015 192 499
- US-A1- 2017 006 201
- US-A1- 2017 241 286

## Beschreibung

Die vorliegende Erfindung betrifft ein On-Wing-Inspektionsverfahren nach dem Oberbegriff des Patentanspruchs 1 sowie ein System zur Durchführung eines derartigen Inspektionsverfahrens.

Vorrichtungen wie Kraftmaschinen, beispielsweise Strömungsmaschinen, sind gewöhnlich zur Zustandsüberwachung von nicht sichtbaren Maschinenbauteilen im Maschineninnern mit einer Vielzahl von Sensoren wie Temperatursensoren und Schwingungssensoren versehen. Registriert nun beispielsweise ein hochdruckturbinenseitiger Temperatursensor eine sogenannte Übertemperatur, so wird bei Flugtriebwerken im Cockpit eine entsprechende Warnmeldung ausgegeben. Zur Überprüfung, ob das Flugtriebwerk durch die Übertemperatur einen Schaden genommen hat, wird das Triebwerk vom Flügel demontiert und auf Bauteilebene zerlegt. An der ersten Hochdruckturbinenstufe wird dann eine zerstörende metallografische Gefügeanalyse durchgeführt. Anhand von Schliffstandards wird die Gefügeänderung der Hochdruckturbinenlaufschaufel an drei Stellen bewertet. Zur Berücksichtigung normaler, alterungsbedingter Effekte auf die Gefügestruktur wird ein Schliff auch aus nicht überhitzten Bereichen der Prüfschaufel, zum Beispiel dem Schaufelfuß, zur Bewertung der Veränderungen in Blattmitte herangezogen. Wird eine unzulässige Schädigung des Bauteils nachgewiesen, sind alle Laufschaufeln dieser Stufe zu ersetzen und die Inspektion wird für eine nachfolgende Turbinenstufe fortgesetzt. Es hat sich jedoch gezeigt, dass in ca. 80 % der Fälle keine Schädigung des Laufschaufelwerkstoffes durch die Übertemperatur eingetreten ist.

Bislang sind verschiedene Verfahren zur Prüfung des Zustands von außerhalb einer Vorrichtung nicht sichtbaren Bauteilen mittels unterschiedlicher, insbesondere für die jeweiligen Zwecke angepasster Prüfköpfe bekannt, welche teilweise Signalverarbeitungseinrichtungen und Prüfköpfe in verschiedenen Ausbildungen zur Durchführung unterschiedlicher Inspektionsverfahren aufweisen. Solche Verfahren bzw. Aspekte solcher Verfahren und Vorrichtungen hierzu sind beispielsweise in den Dokumenten US 2012/158319 A1, DE 10 2006 048791 A1, DE 11 2014 000505 T5, US 4 139 822 A, US 2017/006201 A1, JP H07 270261 A, US 5 301 061 A, US 2004/051525 A1, US 20143/060289 A1, US 2015/192499 A1, DE 10 2016 224 049 A1 beschrieben.

Darüber hinaus ist aus dem Dokument US 2017/241286 A1 ein Verfahren zum Feststellen eines Verzugs in einer Komponente eines Gasturbinenmotors, aus EP 3 171 166 A1 ein Verfahren zum Überprüfen einer von außen nicht sichtbarer Komponente einer Vorrichtung und aus US 2014/260755 A1 sind mehrgliedrige Roboterarme für Luftanwendungen bekannt, wobei der Roboterarm für die in-situ-Reparatur einer internen Komponente eines Gasturbinentriebwerks verwendet werden kann.

Aufgabe der Erfindung ist es, ein On-Wing-Inspektionsverfahren zu schaffen, dass einen reduzierten Inspektionsaufwand aufweist. Des Weiteren ist es Aufgabe der Erfindung ein System zu schaffen, dass die Durchführung des On-Wing-Inspektionsverfahrens ermöglicht.

Diese Aufgabe wird gelöst durch ein On-Wing-Inspektionsverfahren mit den Merkmalen des Patentanspruchs 1 und durch ein System mit den Merkmalen des Patentanspruchs 10.

Ein erfindungsgemäßes On-Wing-Inspektionsverfahren zum Überprüfen eines Zustandes eines von außen nicht sichtbaren Bauteils und insbesondere von außen nicht zugänglichen Bauteils bzw. Bauteilbereichs einer Vorrichtung sieht die Verwendung eines Boroskops vor. In einem 1. Schritt wird ein zerstörungsfreies Prüfverfahren angewendet, bei dem eine physikalische Eigenschaft zumindest eines Bauteilbereichs erfasst wird. In einem Folgeschritt wird ein Vergleich zwischen einem durch das zerstörungsfreie Prüfverfahren erfassten physikalischen Ist-Wert und einem physikalischen Referenzwert des Bauteilbereichs durchgeführt. Der Referenzwert wird aus einer Datenbank gelesen und berücksichtigt eine Alterung des Bauteils. In einem weiteren Schritt wird dann eine Abweichung des Ist-Wertes von dem Referenzwert bewertet.

Das erfindungsgemäße On-Wing-Inspektionsverfahren trifft eine zuverlässige und klare Entscheidung darüber, ob eine aufwendig herkömmliche Inspektion wie ein Öffnen der Vorrichtung mit beispielsweise einer zerstörenden metallografischen Werkstoffuntersuchung einzelner Bauteile notwendig ist. Es ist erkannt worden, dass eine Gefügeänderung des Bauteils bzw. des Bauteilwerkstoffes nicht nur mittels einer Metallografieuntersuchung bzw. allgemeiner ausgedrückt mittels einer Materialografieuntersuchung nachweisbar ist, sondern dass sich die Gefügeänderung ebenfalls auch auf physikalische Eigenschaften des Bauteils auswirkt, was durch entsprechende physikalische Messverfahren erfasst werden kann. Der Begriff "Materialografieuntersuchung" umfasst Schliffbilduntersuchungen auch von Bauteilen, die nicht metallischer Natur sind, wie zum Beispiel Bauteile aus Faserverbundkunststoffen. Er umfasst somit den Begriff "Metallografieuntersuchung", der wortsinngemäß nur Untersuchungen an metallischen Bauteilen umfasst. Eine boroskopbasierte zerstörungsfreie Überprüfung der Veränderung einer oder mehrerer physikalischer Eigenschaften ermöglicht eine Untersuchung des Bauteils bei geschlossener Vorrichtung und somit an der montierten Vorrichtung. Eine unnötige Zerlegung der Vorrichtung wird vermieden. Die Berücksichtigung der Alterung gewährleistet ein zuverlässiges Prüfergebnis, da eine Abweichung in der jeweils gemessenen physikalischen Eigenschaft nicht auf ein Neuteil bezogen wird, das eben keine Alterungsspuren aufweist, sondern auf ein gelaufenes Bauteil mit gleicher oder zumindest ähnlicher Historie. Die Alterung des Bauteils bzw. Bauteilwerkstoffs, ergibt sich beispielsweise über Temperaturereignisse aus dem Flugbetrieb wie Temperaturverlauf und Höchsttemperatur, Laufdauer, Betriebspunkt des Triebwerks, ETM-Daten und dergleichen. Hierdurch lässt sich der Inspektionsaufwand wesentlich reduzieren. Der Vergleich und die Bewertung erfolgen vorzugsweise automatisiert, so dass eine das Inspektionsverfahren durchführende Person lediglich das Boroskop mit einem Prüfkopf auszuwählen und entsprechend zu positionieren hat. Die Wahl des geeigneten Prüfverfahrens kann sich an Kriterien wie dem Bauteilwerkstoff, der Bauteilzugänglichkeit und/oder der bisherigen Historie des Bauteils orientieren und unter Berücksichtigung dieser beispielhaften Kriterien ebenfalls automatisiert dem Anwender vorgeschlagen werden. Beispielhafte Vorrichtungen sind Kraftmaschinen wie Strömungsmaschinen, insbesondere Flugtriebwerke, Industrieturbinen, Kraftwerksturbinen und Schiffsturbinen.

Der Inspektionsaufwand wird bei Anwendung des erfindungsgemäßen Inspektionsverfahrens deutlich reduziert. Das Inspektionsverfahren ermöglicht bei einer schnellen Überprüfung mehrerer Schaufeln ein zuverlässigeres Prüfergebnis und somit eine belastbare Ausage über den Zustand des jeweiligen Bauteils. Bei Flugtriebwerken werden unnötige "Shop Visits" vermieden, stattdessen werden die "On-Wing-Zeiten" erhöht.

Bevorzugte zerstörungsfreie Prüfverfahren beinhalten eine Aussetzung des zumindest einen Bauteilbereichs einem Mikrowellenfeld, einem Ultraschallfeld, Röntgenstrahlen oder einem Wirbelstrom. Weitere alternative oder ergänzende zerstörungsfreie Prüfverfahren sind, ohne einschränkend zu wirken, eine Thermografieanalyse, eine Schwingungs- und Resonanzanalyse und/ oder eine Leitfähigkeitsmessung, insbesondere eine elektrische Leitfähigkeitsmessung.

So ist zur Durchführung einer Röntgenprüfung die Zugänglichkeit des bzw. der Bauteile von zwei Seiten vorteilhaft. Beispielsweise können durch vorhandene Bohrungen, wie insbesondere bei Strömungsmaschinen Bohrungen in der Brennkammer, die beispielsweise für Einspritzdüsen genutzt werden, der Röntgenstrahler geführt und durch vorhandene Boroskopöffnungen im Gehäuse der Strömungsmaschine Röntgendetektoren eingeführt und sicher positioniert werden.

Bei der Durchführung einer Wirbelstromprüfung ist es beispielsweise zweckmäßig, den Messkopf bauteilbezogen zu positionieren, um das erfasste Materialvolumen reproduzierbar zu definieren. Hierbei ist die Orientierung und Fixierung des Prüfkopfs insbesondere an den Kühlluftbohrungen verwendbar.

Eine weitere konkret durchführbare Messmethode ist die prozesskompensierte Resonanzprüfung PCRT (Process Compensated Resonance Testing). Über diese Resonanzanalyse können mittels einer speziellen Hochfrequenzmesstechnik und einer speziellen Analyse-Software auch vergleichsweise kleine lokale Veränderungen im Bauteil erfasst werden.

Bei der Durchführung einer elektrischen Leitfähigkeitsmessung können die Elektroden zum Festlegen des Strompfads durch das Bauteil so gestaltet werden, dass ein Stromein- und -austritt beispielsweise über die Kühlluftbohrungen erfolgt. Insbesondere ist beim Verwenden von mehr als zwei Messstellen eine Kreuzmessung möglich, die Aussagen um eine Fläche ermöglicht.

Die genannten Beispiele für zerstörungsfreie Prüfverfahren: Röntgenprüfung Wirbelstromprüfung Resonanzprüfung und Leitfähigkeitsmessung stellen beispielsweise konkrete Anwendungen an Turbinenschaufeln im eingebauten Zustand bei Strömungsmaschinen dar.

Sollte beim Bewerten festgestellt werden, dass, die Abweichung innerhalb eines zulässigen Toleranzfeldes liegt, sieht ein Ausführungsbeispiel vor, das Bauteil als "in Ordnung" beurteilt wird. Die Inspektionsprüfung kann dann beendet oder zur Erhöhung der Sicherheit und Zuverlässigkeit des Prüfergebnisses für einen weiteren Bauteilbereich oder für ein weiteres Bauteil wiederholt werden.

Sollte beim Bewerten festgestellt werden, dass die Abweichung außerhalb eines zulässigen Toleranzfeldes liegt, wird das Bauteil bevorzugterweise einer zerstöremden Materialografieuntersuchung unterzogen. Alternativ kann eine erneute zerstörungsfreie Prüfung mit einem alternativen Prüfverfahren durchgeführt werden. Zeigt als Ergebnis auch das zweite Prüfverfahren eine zu große bzw. nicht tolerierbare Abweichung des gemessenen Ist-Wertes von dem Referenzwert, wird das Bauteil erst dann einer zerstörenden Materialografieuntersuchung zugeführt. Sollte jedoch die zweite Prüfung eine tolerierbare Abweichung zeigen, kann eine dritte Prüfung mit einem zum ersten und zweiten Prüfverfahren andersartigen zerstörungsfreien Prüfverfahren durchgeführt werden. Wenn die dritte Prüfung dann eine nicht tolerierbare Abweichung zeigt, wird das Bauteil erst dann einer zerstörenden Materialografieuntersuchung zugeführt. Wenn die dritte Prüfung jedoch eine tolerierbare Abweichung zeigt, kann das Bauteil als "in Ordnung" bewertet werden. Durch diese Maßnahmen kann eine unnötige zerstörende Materialografieuntersuchung verhindert werden.

Sollte beim Bewerten festgestellt werden, dass, die Abweichung innerhalb eines zulässigen Toleranzfeldes liegt, sieht ein Ausführungsbeispiel vor, die vorgenannten Schritte (Anwendung zerstörungsfreies Prüfverfahren, Wertevergleich und Bewertung) zumindest einmal mit einem andersartigen zerstörungsfreien Prüfverfahren für den zuvor geprüften zumindest einen Bauteilbereich zu wiederholen. Hierdurch wird die Sicherheit, die Zuverlässigkeit und die Objektivität des Inspektionsverfahrens erhöht. Die Auswahl des Prüfverfahrens für die sogenannte Kontrollprüfung erfolgt wie schon die Erstprüfung bevorzugterweise automatisiert anhand von Kriterien wie Bauteilwerkstoff, Bauteilzugänglichkeit und/oder bisherige Bauteilhistorie, ergänzt um das Kriterium, dass das zweite Prüfverfahren andersartig als das erste Prüfverfahren ist. Dabei kann es vorteilhaft sein, wenn zusätzlich das Kriterium mitberücksichtigt werden, dass nicht zwei gleichartige Prüfverfahren verwendet werden. Wenn zum Beispiel das erste Prüfverfahren ein Erfassen der elektrischen Leitfähigkeit zum Gegenstand hatte, so kann es vorteilhaft sein, wenn beim zweiten Prüfverfahren beispielsweise eine Durchleuchtungsprüfung erfolgt. Der Vergleich erfolgt vorzugsweise automatisiert.

Sollte nach dem erneuten Durchführen der vorgenannten Schritte (Anwendung zerstörungsfreies Prüfverfahren, Wertevergleich und Bewertung) bei der Bewertung festgestellt werden, dass die Abweichung innerhalb eines zulässigen Toleranzfeldes liegt, sieht ein Ausführungsbeispiel vor, dass das Bauteil als "in Ordnung" beurteilt wird. Die Bewertung erfolgt vorzugsweise automatisiert.

Sollte nach dem erneuten Durchführen der vorgenannten Schritte (Anwendung zerstörungsfreies Prüfverfahren, Wertevergleich und Bewertung) bei der Bewertung festgestellt werden, dass die Abweichung außerhalb eines zulässigen Toleranzfeldes liegt, sieht ein Ausführungsbeispiel vor, dass die Vorrichtung geöffnet und das Bauteil einer zerstörenden Materialografieuntersuchung unterzogen wird. Durch die negativ ausgefallene Kontrollprüfung ist das Bauteil mit großer Wahrscheinlichkeit schadhaft, so dass es wahrscheinlich auszutauschen ist.

Um eine Aussage über den Zustand eines für einen Prüfkopf des Boroskops unzugänglichen Bauteilbereich zu treffen, sieht ein Ausführungsbeispiel vor, den unzugänglichen Bauteilbereich dann als "in Ordnung" zu bewerten, wenn nach dem erneuten Durchführen der Schritte a) bis c) die Bewertung ein Feststellen umfasst, dass die Abweichung innerhalb eines zulässigen Toleranzfeldes liegt.

Bevorzugterweise werden die zerstörungsfreien Prüfverfahren, die angewendet werden sollen, zuvor an Referenzbauteilen kalibriert. Die Kalibrierung ist eine vorbereitende Maßnahme und erhöht die Zuverlässigkeit des eigentlichen Inspektionsverfahrens. Die Referenbauteile weisen beispielsweise unterschiedliche Laufzeiten, verschiedene maximale Betriebstemperaturen und dergleichen auf.

Ein erfindungsgemäßes System, das dazu eingerichtet ist, ein erfindungsgemäßes On-Wing-Inspektionsverfahren durchzuführen, hat eine Rechnereinheit und einen Prüfkopf. Es ist insbesondere zur automatisierten Auswahl des zerstörungsfreien Prüfverfahrens, zur Erfassung der physikalischen Eigenschaft an sich, zur automatisierten Durchführung des Wertevergleichs zwischen dem erfassten Ist-Wert und dem Referenzwert und der automatisierten Bewertung einer Toleranz zwischen dem Ist-Wert und dem Referenzwert eingerichtet. Das System erlaubt eine zuverlässige Zustandsüberprüfung eines im Inneren einer Vorrichtung und von außen nicht sichtbaren und insbesondere von außen nicht zugänglichen Bauteils bzw. Bauteilbereichs. Das System ist mobil und bevorzugterweise von einer das Inspektionsverfahren durchführenden Person tragbar, so dass es schnell an den jeweiligen Einsatzort gebracht werden kann.

Das System mit Rechnereinheit und Prüfkopf, das zur Durchführung von On-Wing Inspektionen von Triebwerken eingerichtet ist, weist eine insbesondere zangenförmige Ausführung mit mehreren Gliedern auf, wobei mittig am Prüfkopf ein Hauptsensor angeordnet ist. So kann der Prüfkopf beispielsweise zusammenklappbar ausgebildet sein, um im zusammengeklappten Zustand beispielsweise über Boroskopöffnungen an thermisch hoch belastete Stellen beispielsweise bei Turbinenschaufeln wie der Leading Edge, oder die Gaskanalmitte geführt zu werden. Eine flexible, zangenförmige Ausführung mit mehreren Gliedern erlaubt ein Öffnen und ein optimales Umschließen des zu prüfenden Bereiches eines Bauteils wie beispielsweise der Leading Edge eines Airfoils auch bei unterschiedlicher Geometrie. Der mittig angeordnete ein Hauptsensor kann bei Bedarf auch für unterschiedliche Triebwerkstypen bzw. Bauteile wie Hochdruckturbinenschaufeln angepasst und/ oder ausgetauscht werden. Die seitlichen Glieder dienen der Stabilisierung und Fixierung des Prüfkopfes am Bauteil.

Bei einer Ausführung des Prüfkopfs weisen die seitlichen Glieder zusätzliche Sensoren in Form von starr oder beweglich ausgeführten Prüfknöpfen auf, um bei Turbinenschaufeln beispielsweise Bereiche hinter der Leading Edge (Innenstruktur der Schaufel) über die Druck- und Saugseite zu prüfen.

Bei einer Ausführung des Prüfkopfs ist der Prüfkopf beweglich und austauschbar ausgeführt, insbesondere zum Durchführen mehrerer Prüfverfahren und zum Anpassens des Systems an verschiedene Prüfaufgaben.

Bei einer Ausführung ist der Prüfkopf an einer flexiblen, starren oder versteifbaren Prüfkopfführung mit integrierten Signal- und/ oder Steuerleitungen angeordnet ist, welche den Prüfkopf insbesondere mit der Rechnereinheit verbinden, und bei einer Ausführung des Prüfkopfs ist zur Anbindung des Prüfkopfs an die Prüfkopfführung eine schwenkbare Anbindungseinrichtung vorgesehen um eine flexible Bewegbarkeit des Systems bei der Durchführung des Inspektionsverfahrens zu ermöglichen.

Bei einer Ausführung des Prüfkopfs sind an der Anbindungseinrichtung Kameras vorgesehen, welche insbesondere zur Führung und Positionierung des Prüfkopfes und/ oder zum Durchführen von Messungen und zur Dokumentation der Untersuchung vorgesehen werden kann.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine Seitenansicht eines beispielhaft zu inspizierenden Bauteils,
- Figur 2: eine Draufsicht auf einen Bereich des in Figur 1 gezeigten Bauteils,
- Figur 3: einen Ablauf eines erfindungsgemäßen Inspektionsverfahrens, und
- Figur 4a und 4b: einen beispielhaften Prüfkopf eines erfindungsgemäßen Systems.

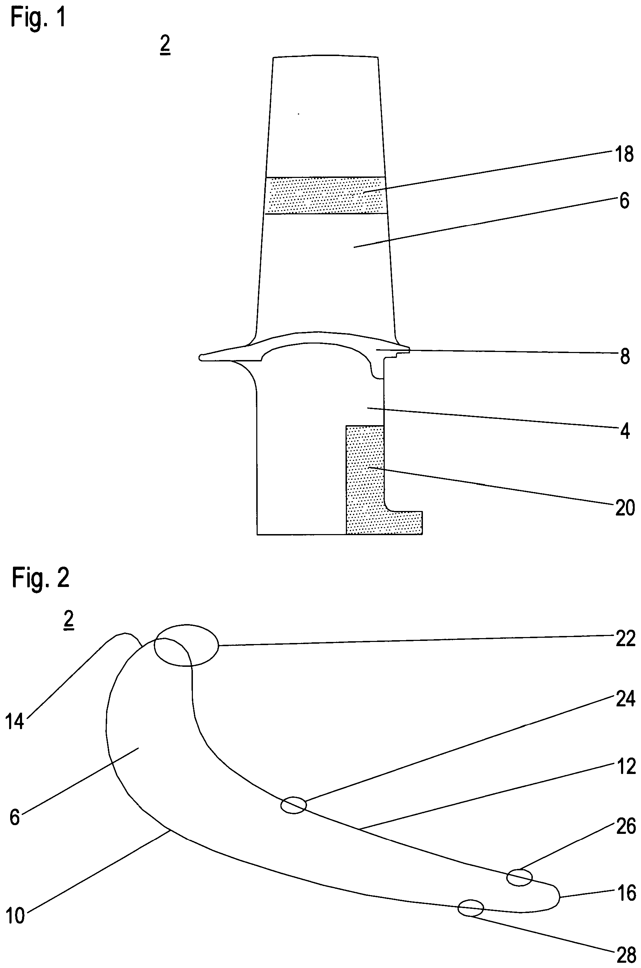

In den Figuren 1 bis 3 wird ein bevorzugtes Ausführungsbeispiel eines erfindungsgemäßen Inspektionsverfahrens 1 an einem beispielhaften Bauteil 2 erläutert. Das beispielhafte Bauteil 2 ist in den Figuren 1 und 2 skizziert und eine turbinenseitige Laufschaufel 2 einer Strömungsmaschine wie ein Flugtriebwerk. Die Laufschaufel 2 hat im Wesentlichen einen Schaufelfuß 4, ein Schaufelblatt 6 und eine zwischen dem Schaufelfuß 4 und dem Schaufelblatt 6 angeordnete Plattform 8. Das Schaufelblatt 6 hat eine Saugseite 10 sowie eine entgegengesetzte Druckseite 12, die über eine Vorderkante 14 und eine Hinterkante 16 miteinander verbunden sind.

In einem blattseitigen Bauteilabschnitt 18, bevorzugterweise in einem Bauteilabschnitt 18 auf halber Höhe des Schaufelblattes, soll das erfindungsgemäße Inspektionsverfahren 1 beispielhaft angewendet werden. Hierzu wird in dem blattseitigen Bauteilabschnitt 18 ein druckseitiger vorderer Bauteilbereich bzw. Prüfbereich 22 festgelegt. Der Bauteilabschnitt 18 und der Prüfbereich 22 sind nahezu beliebig festlegbar, solange sie für eine folgende zerstörungsfreie boroskopbasierte Prüfung und insbesondere für einen Prüfkopf eines Boroskops zugänglich sind.

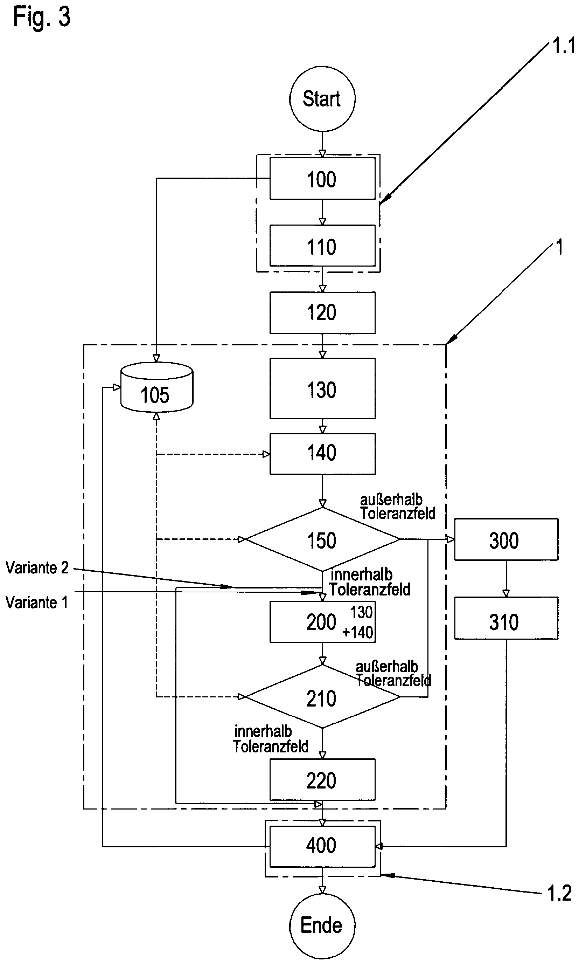

In Figur 3 ist nun der Ablauf des Inspektionsverfahrens 1 skizziert. Benötigt wird ein Boroskop mit einem erfindungsgemäßen System. Das System weist eine Rechnereinheit und einen entsprechenden Prüfkopf für das Boroskop auf. Der Prüfkopf ermöglicht die Anwendung von den beabsichtigten zerstörungsfreien Prüfverfahren. Die Datenbank 105 kann Teil der Rechnereinheit sein und somit ein Speichermedium der Rechnereinheit darstellen.

Vor dem Beginn des eigentlichen Inspektionsverfahrens 1 werden vorbereitende Maßnahmen 1.1 (Schritte 100 und 110) durchgeführt, die eine wiederholte Anwendung des Inspektionsverfahrens 1 ermöglichen. Die vorbereitenden Maßnahmen werden zumindest einmal vorgenommen, um das Inspektionsverfahren 1 dann beliebig oft durchführen zu können. Im Wesentlichen wird bei den vorbereitenden Maßnahmen eine Datenmenge, zumindest bestehend aus Referenzwerten und bevorzugterweise auch aus referenzwertbezogenen Toleranzen bzw. Toleranzfeldern, angelegt, die zusätzlich um Kalibrierungsergebnisse von Prüfverfahren ergänzt werden können.

Im Schritt 100 (Erstellen einer Datenbank) wird eine Datenbank 105 mit Referenzwerten von zumindest den Bauteilabschnitten 18 des Bauteils 2 erstellt, in denen die Prüfbereiche 22, 24, 26, 28 definiert sind und die im Rahmen des Inspektionsverfahrens per Boroskop hinsichtlich einer Veränderung ihrer physikalischen Werkstoffeigenschaften untersucht werden sollen. Die Referenzwerte werden von im Betrieb gewesenen und/oder sich im Betrieb befindenden Referenzbauteilen gewonnen und enthalten eine Alterung des Bauteilwerkstoffs, die sich beispielsweise über Temperaturereignisse aus dem Flugbetrieb wie Temperaturverlauf und Höchsttemperatur, Laufdauer, Betriebspunkt des Triebwerks, ETM-Daten und dergleichen ergibt. Jedem Referenzwert wird ein Toleranzfeld zugeordnet, um bestimmen zu können, ob eine Abweichung zwischen dem Referenzwert und einem gemessenen Ist-Wert des Bauteils bzw. Bauteilwerkstoffs im jeweiligen Prüfbereich 22 tolerierbar oder nicht tolerierbar ist.

Im Schritt 110 (Kalibrieren von Prüfverfahren) werden dann mögliche zerstörungsfreie Prüfverfahren an dem Referenzbauteil kalibriert. Beispielhafte und nicht abschließende Prüfverfahren sind Messungen der elektrischen, magnetischen und/oder thermischen Leitfähigkeit (Wirbelstrom, Mikrowelle und Thermografie), Schwingungs- und Resonanzuntersuchungen, Durchdringungseigenschaften (Röntgenstrahlen und Ultraschall), eine Leitfähigkeitsmessung, insbesondere eine Leitfähigkeitsmessung, und dergleichen. Die Ergebnisse der Kalibrierung können ebenfalls in die Datenbank 105 geschrieben werden.

Die vorbereitenden Maßnahmen 1.1 für das eigentliche Inspektionsverfahren 1 sind damit abgeschlossen. Sobald nun eine Warnmeldung 120 von einem entsprechenden Sensor an dem Flugtriebwerk wie eine Übertemperatur erzeugt wird, schlägt das Inspektionsverfahren 1 erfindungsgemäß die im Folgenden erläuterten Schritte vor.

Im Schritt 130 (Anwenden eines Prüfverfahrens bei geschlossener Vorrichtung) wird ein zerstörungsfreies Prüfverfahren ausgewählt und ein Boroskop mit einem entsprechenden Prüfkopf versehen. Bevorzugterweise werden einem Anwender von dem System ein bevorzugtes Prüfverfahren vorgeschlagen. Kriterien für die automatisierte Auswahl können sein Bauteilwerkstoff, Bauteilzugänglichkeit und/oder bisherige Bauteilhistorie.

Im Schritt 140 (Vergleich zwischen Ist-Wert und Referenzwert) wird dann ein Vergleich zwischen dem durch das zerstörungsfreie Prüfverfahren erfassten physikalischen Ist-Wert und einem zugehörigen physikalischen Referenzwert des Bauteilbereich 22, der aus der Datenbank gelesen wird und wie vorgenannt die Alterung des Bauteils 2 bzw. dessen Werkstoffs in zumindest diesem Prüfbereich 22 enthält, durchgeführt. Der Vergleich erfolgt bevorzugterweise automatisiert, so dass eine größtmögliche Objektivität gegeben ist.

Im Schritt 150 (Bewertung einer Abweichung) wird dann festgestellt, ob die Abweichung außerhalb oder innerhalb des zulässigen referenzwertbezogenen Toleranzfeldes liegt. Die Bewertung erfolgt vorzugsweise automatisiert, so dass eine größtmögliche Objektivität gegeben ist.

Wenn die Abweichung außerhalb des Toleranzfeldes liegt, wird in einem Schritt 300 (Öffnen der Vorrichtung) das Flugtriebwerk von dem jeweiligen Fluggerät demontiert und in einem Schritt 310 (Materialografieuntersuchung) das Bauteil 2 zerstörend materialografisch untersucht. D. h., es erfolgt eine eingangs erläuterte herkömmliche Inspektion des Flugtriebwerks.

Wenn die Abweichung innerhalb des Toleranzfeldes liegt, wird bevorzugterweise zur Erhöhung der Sicherheit und Zuverlässigkeit in einem Schritt 200 (Kontrollprüfung bei geschlossener Vorrichtung) der Prüfbereich 22 einer Kontrollprüfung unterzogen (Variante 1). Alternativ kann direkt nach der positiven Bewertung zum Schritt 400 (Ergebnisse in Datenbank schreiben) gegangen werden (Variante 2). Der Schritt 400 (Ergebnisse in Datenbank schreiben) wird im Folgenden noch erläutert.

Bei der Kontrollprüfung 200 (Variante 1) werden die Schritte 130 (Anwenden eines Prüfverfahrens bei geschlossener Vorrichtung) und 140 (Vergleich zwischen Ist-Wert und Referenzwert) unter Anwendung eines zum ersten Prüfverfahren andersartigen zerstörungsfreien Prüfverfahrens erneut durchgeführt. Die Auswahl des Prüfverfahrens für die Kontrollprüfung erfolgt wie schon die Erstprüfung bevorzugterweise automatisiert anhand von Kriterien wie Bauteilwerkstoff, Bauteilzugänglichkeit und/oder bisherige Bauteilhistorie, ergänzt um das Kriterium, dass das zweite Prüfverfahren andersartig als das erste Prüfverfahren ist.

Im Schritt 210 (Bewertung einer Abweichung), der dem Schritt 150 (Bewertung einer Abweichung) entspricht, wird dann zum Abschluss der Kontrollprüfung 200 festgestellt, ob die Abweichung außerhalb oder innerhalb des für die Kontrollprüfung geltenden zulässigen Toleranzfeldes liegt.

Wenn die Abweichung außerhalb des Toleranzfeldes liegt, wird mit den Schritten 300 (Öffnen der Vorrichtung) und dem oben erläuterten Schritt 310 (Materialografieuntersuchung) weiter verfahren.

Wenn die Abweichung innerhalb des Toleranzfeldes liegt, wird in einem Schritt 220 (Bauteil "in Ordnung") bestimmt, dass der Bauteilwerkstoff im Prüfbereich 22 durch die Übertemperaturwarnung nicht derart beschädigt wurde, dass das Bauteil nicht weiter verwendet werden dürfte. Das Inspektionsverfahren 1 ist dann für den Prüfbereich 22 abgeschlossen.

Nach der Durchführung des Inspektionsverfahrens 1 folgt eine Nachbereitung 1.2 (Schritt 400). Dabei werden im Schritt 400 (Prüfergebnisse in Datenbank 105 schreiben) die durch die zerstörungsfreien Prüfungen und auch die durch die gegebenenfalls notwendigen Materialografieuntersuchungen gewonnenen Ist-Werte in die Datenbank 105 zur weiteren Berücksichtigung der Alterung bezüglich des Prüfbereiches 22 eingepflegt.

Um eine Aussage über die Werkstoffbeschaffenheit einer für das Boroskop bzw. dessen Prüfkopf nicht zugänglichen Bauteilabschnitt zu treffen, beispielsweise ein in Figur 1 mit dem Bezugszeichen 20 bezifferter fußseitiger Bauteilabschnitt, sieht das Inspektionsverfahren 1 vor, den Zustand des nicht zugänglichen Bauteilabschnitt 20 als "in Ordnung" zu bewerten, wenn auch die Kontrollprüfung 200 (Schritte 130, 140 und 210) ergibt, dass sich die Abweichung für einen zugänglichen Prüfbereich, in dem Beispiel Prüfbereich 22, innerhalb des zulässigen Toleranzfeldes befindet.

Um die Zuverlässigkeit des Inspektionsverfahrens 1 zu erhöhen, wird das Inspektionsverfahren 1 bevorzugterweise nicht nur für einen Prüfbereich 22 durchgeführt, sondern das Inspektionsverfahren 1 wird, wie in Figur 2 angedeutet, auf eine Vielzahl von Prüfbereichen 22, 24, 26, 28 angewendet. Das Inspektionsverfahren 1 kann dabei für jeden Prüfbereich 22, 24, 26, 28 isoliert von den anderen Prüfbereichen 22, 24, 26, 28 durchgeführt werden oder kombiniert.

"Isoliert" bedeutet, dass an jedem Prüfbereich 22, 24, 26, 28 das erste Prüfverfahren und dann die Kontrollprüfung 200 durchgeführt wird, wenn die Abweichung der ersten Prüfung im vorderen Prüfbereich 22 tolerierbar war. Erst danach wird sich dem mittleren Prüfbereich 24, dann dem hinteren Prüfbereich 26 und dann dem saugseitigen Prüfbereich 28 zugewandt.

"Kombiniert" bedeutet, dass erst an allen Prüfbereichen 22, 24, 26, 28 das erste Prüfverfahren und dann, sofern sich keine Abweichung außerhalb des jeweiligen Toleranzfeldes befindet, die Kontrollprüfung 200 an den Prüfbereichen 22, 24, 26, 28 durchgeführt wird.

Der Vorteil des isolierten Vorgehens besteht darin, dass das Boroskop bei jedem Prüfbereich für die erste Prüfung und für die Kontrollprüfung im Prinzip nicht bewegt bzw. neu positioniert werden muss. Hierdurch wird sichergestellt, dass die Kontrollprüfung genau am gleichen Prüfbereich 22, 24, 26, 28 wie die vorhergehende bzw. Erstprüfung durchgeführt wird, was die Zuverlässigkeit der Messergebnisse erhöht.

Der Vorteil des kombinierten Vorgehens besteht darin, dass im Vergleich zum isolierten Vorgehen der Prüfkopf nicht so häufig gewechselt werden muss, da der Prüfkopf erst gewechselt wird, wenn die Erstprüfung an sämtlichen Prüfbereichen 22, 24, 26, 28 durchgeführt ist. Dafür muss das Boroskop und insbesondere dessen Prüfkopf an jedem Prüfbereich zweimal eingemessen werden.

Offenbart sind ein boroskopbasiertes Inspektionsverfahren zum Überprüfen eines Zustandes eines von außen nicht sichtbaren Bauteils einer Vorrichtung, wobei eine Gefügeänderung des Bauteilwerkstoffs anhand einer physikalischen Eigenschaft erfasst und bezogen auf zumindest einen physikalischen Referenzwert bewertet wird, in denen eine Alterung des Werkstoffs berücksichtigt ist, sowie ein System mit einer Rechnereinheit und zumindest einem Prüfkopf zur Durchführung eines derartigen Inspektionsverfahrens zur rechnergestützten und insbesondere rechnerdurchgeführten Auswahl eines zerstörungsfreien Prüferverfahrens zur Erfassung der physikalischen Eigenschaft sowie der Erfassung der physikalischen Eigenschaft an sich, Durchführung eines Wertevergleichs zwischen einem erfassten Ist-Wertes und dem Referenzwert und einer Bewertung einer Toleranz zwischen dem Ist-Wert und dem Referenzwert.

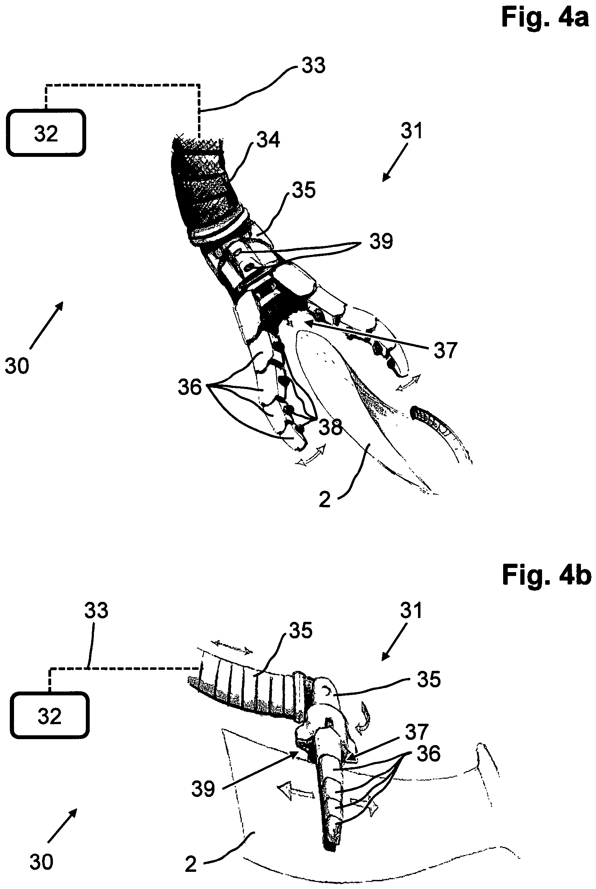

In den Figuren 4a und 4b ist ein beispielhafter Prüfkopf 31 eines erfindungsgemäßen Systems 30 dargestellt. Der beispielhaft dargestellte Prüfkopf 31 ist insbesondere für On-Wing Inspektionen von Triebwerken geeignet. Dieser ist, wie in Figur 1 dargestellt, über eine Datenleitung 33 mit einer Rechnereinheit 32 verbunden. Der Prüfkopf 31 kann im zusammengeklappten Zustand beispielsweise über Boroskopöffnungen an thermisch hoch belastete Stellen wie der Leading Edge, oder die Gaskanalmitte von Turbinenschaufeln geführt werden. Seine flexible, zangenförmige Ausführung mit mehreren Gliedern 36 erlaubt ein Öffnen und ein optimales Umschließen des zu prüfenden Bereiches eines Bauteils 2 wie beispielsweise der Leading-Edge eines Airfoils auch bei unterschiedlicher Geometrie. Mittig ist ein Hauptsensor 37 beispielsweise zum Prüfen der Leading Edge eines Airfolis angeordnet, der bei Bedarf auch für unterschiedliche Triebwerkstypen bzw. Bauteile 2 wie Hochdruckturbinenschaufeln angepasst und/ oder ausgetauscht werden kann. Die seitlichen Glieder 36 dienen der Stabilisierung und Fixierung des Prüfkopfes 31 am Bauteil 2. Diese können aber auch zusätzliche Sensoren in Form von starr oder beweglich ausgeführten Prüfknöpfen 38 aufweisen, um beispielsweise bei Turbinenschaufeln Bereiche hinter der Leading Edge (Innenstruktur der Schaufel) über die Druck- und Saugseite zu prüfen.

Der bewegliche und austauschbare Prüfkopf 31 ist an einer flexiblen, starren oder versteifbaren Prüfkopfführung 34 mit integrierten Signal- und/ oder Steuerleitungen 33 angeordnet, welche den Prüfkopf 31 mit der Rechnereinheit 32 verbinden. Zur Anbindung des Prüfkopfs 31 an die Prüfkopfführung 34 kann eine schwenkbare Anbindungseinrichtung 35 vorgesehen sein, an welcher Kameras 39 zur Führung und Positionierung des Prüfkopfes 31, zum Durchführen von Messungen und zur Dokumentation der Untersuchung vorgesehen werden kann.

### Bezugszeichenliste

- 1: Inspektionsverfahren
- 2: Bauteil / Schaufel
- 4: Schaufelfuß
- 6: Schaufelblatt
- 8: Plattform
- 10: Saugseite
- 12: Druckseite
- 14: Vorderkante
- 16: Hinterkante
- 18: blattseitiger Bauteilabschnitt
- 20: fußseitiger Bauteilabschnitt
- 22: vorderer Bauteilbereich / Prüfbereich
- 24: mittlerer Bauteilbereich / Prüfbereich
- 26: hinterer Bauteilbereich / Prüfbereich
- 28: saugseitiger Bauteilbereich / Prüfbereich
- 30: System
- 31: Prüfkopf
- 32: Rechnereinheit
- 33: Datenleitung
- 34: Prüfkopfführung
- 35: Anbindungseinrichtung
- 36: Glieder
- 37: Hauptsensor
- 38: Prüfknopf
- 39: Kamera
- 100: Erstellen Datenbank
- 105: Datenbank
- 110: Kalibrieren von Prüfverfahren
- 120: Warnmeldung
- 130: Anwenden des Prüfverfahrens bei geschlossener Vorrichtung
- 140: Vergleich zwischen Ist-Wert und Referenzwert
- 150: Bewerten einer Abweichung
- 300: Öffnen der Vorrichtung
- 310: Materialografieuntersuchung
- 200: Kontrollprüfung bei geschlossener Vorrichtung
- 210: Bewerten der Abweichung
- 220: Bauteil "in Ordnung"
- 400: Ergebnisse in Datenbank schreiben

## Patentansprüche

1. On-Wing-Inspektionsverfahren (1) zum schnellen Überprüfen eines Zustandes von außen nicht sichtbarer Schaufeln eines Flugtriebwerks mit einem Boroskop, mit den Schritten:
a. Anwenden eines zerstörungsfreien Prüfverfahrens (130, 200), bei dem eine physikalische Eigenschaft zumindest eines Bauteilbereichs (22, 24, 26, 28) erfasst wird,
b. Durchführen eines Vergleichs (140) zwischen einem durch das zerstörungsfreie Prüfverfahren (130, 200) erfassten physikalischen Ist-Wert und einem physikalischen Referenzwert des Bauteilbereichs (22, 24, 26, 28), der aus einer Datenbank (105) gelesen wird und in dem eine Alterung des Bauteils (2) berücksichtigt ist,
c. Bewerten (150, 210) einer Abweichung des Ist-Wertes von dem Referenzwert.

2. On-Wing-Inspektionsverfahren nach Patentanspruch 1, wobei bei dem Prüfverfahren (130, 200) der Bauteilbereich (22, 24, 26, 28) einem Mikrowellenfeld, einem Ultraschallfeld, Röntgenstrahlen oder einem Wirbelstrom ausgesetzt wird, eine Thermografieanalyse, Schwingungs- und Resonanzanalysen oder eine Leitfähigkeitsmessung durchgeführt wird.

3. On-Wing-Inspektionsverfahren nach Patentanspruch 1 oder 2, wobei das Bewerten (150) ein Feststellen umfasst, dass die Abweichung innerhalb eines zulässigen Toleranzfeldes liegt, und wobei das Bauteil (2) als "in Ordnung" beurteilt wird.

4. On-Wing-Inspektionsverfahren nach Patentanspruch 1 oder 2, wobei das Bewerten (150) ein Feststellen umfasst, dass die Abweichung außerhalb eines zulässigen Toleranzfeldes liegt, und wobei das Bauteil (2) einer zerstörenden Materialografieuntersuchung unterzogen wird.

5. On-Wing-Inspektionsverfahren nach Patentanspruch 1 oder 2, wobei das Bewerten (150) ein Feststellen umfasst, dass die Abweichung innerhalb eines zulässigen Toleranzfeldes liegt, und wobei die Schritte a) bis c) zumindest einmal mit einem andersartigen zerstörungsfreien Prüfverfahren (200) für den zuvor geprüften zumindest einen Bauteilbereich (22, 24, 26, 28) wiederholt werden.

6. On-Wing-Inspektionsverfahren nach Patentanspruch 5, wobei nach dem erneuten Durchführen der Schritte a) bis c) das Bewerten (210) ein Feststellen umfasst, dass die Abweichung innerhalb eines zulässigen Toleranzfeldes liegt, und wobei das Bauteil (2) als "in Ordnung" beurteilt wird.

7. On-Wing-Inspektionsverfahren nach Patentanspruch 5, wobei nach dem erneuten Durchführen der Schritte a) bis c) die Bewertung (210) ein Feststellen umfasst, dass die Abweichung außerhalb eines zulässigen Toleranzfeldes liegt, und wobei die Vorrichtung geöffnet und das Bauteil (2) einer Materialografieuntersuchung unterzogen wird.

8. On-Wing-Inspektionsverfahren nach Patentanspruch 6, wobei nach dem erneuten Durchführen der Schritte a) bis c) die Bewertung (210) ein Feststellen umfasst, dass die Abweichung innerhalb eines zulässigen Toleranzfeldes liegt, und wobei ein für einen Prüfkopf des Boroskops unzugänglicher Bauteilbereich (22, 24, 26, 28) "in Ordnung" ist.

9. On-Wing-Inspektionsverfahren nach einem der vorhergehenden Patentansprüche, wobei das jeweilige Prüfverfahren (130, 200) an Referenzbauteilen kalibriert wird.

10. System mit Rechnereinheit (32) und Prüfkopf (31), das dazu eingerichtet ist, ein On-Wing-Inspektionsverfahren (1) nach einem der vorhergehenden Patentansprüche durchzuführen.

11. System mit Rechnereinheit (32) und Prüfkopf (31) nach Anspruch 10, wobei der Prüfkopf (31) umfassend eine zangenförmige Ausführung mit mehreren Gliedern (36), wobei mittig am Prüfkopf (31) ein Hauptsensor (37) angeordnet ist.

12. System mit Rechnereinheit (32) und Prüfkopf (31) nach Anspruch 11, wobei die seitlichen Glieder (36) zusätzliche Sensoren in Form von starr oder beweglich ausgeführten Prüfköpfen (38) aufweisen.

13. System mit Rechnereinheit (32) und Prüfkopf (31) nach einem der Ansprüche 10 bis 12, wobei der Prüfkopf (31) beweglich und austauschbar ausgeführt ist.

14. System mit Rechnereinheit (32) und Prüfkopf (31) nach einem der Ansprüche 10 bis 13, wobei der Prüfkopf (31) an einer flexiblen, starren oder versteifbaren Prüfkopfführung (34) mit integrierten Signal- und/ oder Steuerleitungen (33) angeordnet ist, welche den Prüfkopf (31) insbesondere mit der Rechnereinheit (32) verbinden.

15. System mit Rechnereinheit (32) und Prüfkopf (31) nach Anspruch 14, wobei zur Anbindung des Prüfkopfs (31) an die Prüfkopfführung (34) eine schwenkbare Anbindungseinrichtung (35) vorgesehen ist.

16. System mit Rechnereinheit (32) und Prüfkopf (31) nach Anspruch 15, wobei an der Anbindungseinrichtung (35) Kameras (39) vorgesehen sind.

## Claims

1. On-wing inspection method (1) for quickly examining the condition of blades of an aircraft engine that are not visible from the outside using a borescope, the method comprising the steps of:
a. applying a non-destructive testing method (130, 200) in which a physical property of at least one component region (22, 24, 26, 28) is captured,
b. carrying out a comparison (140) between a physical actual value captured by the non-destructive testing method (130, 200) and a physical reference value of the component region (22, 24, 26, 28), which is read from a database (105) and in which aging of the component (2) is taken into account,
c. evaluating (150, 210) a deviation of the actual value from the reference value.

2. On-wing inspection method according to claim 1, wherein in the testing method (130, 200) the component region (22, 24, 26, 28) is exposed to a microwave field, an ultrasonic field, X-rays or an eddy current, a thermography analysis, vibration and resonance analyses or a conductivity measurement is carried out.

3. On-wing inspection method according to either claim 1 or claim 2, wherein the evaluation (150) comprises determining that the deviation is within a permissible tolerance range, and wherein the component (2) is assessed as being "OK".

4. On-wing inspection method according to either claim 1 or claim 2, wherein the evaluation (150) comprises determining that the deviation is outside a permissible tolerance range, and wherein the component (2) is subjected to a destructive materialographic examination.

5. On-wing inspection method according to either claim 1 or claim 2, wherein the evaluation (150) comprises determining that the deviation is within a permissible tolerance range, and wherein steps a) to c) are repeated at least once with a different non-destructive testing method (200) for the previously tested at least one component region (22, 24, 26, 28).

6. On-wing inspection method according to claim 5, wherein after repeating steps a) to c), the evaluation (210) comprises determining that the deviation is within a permissible tolerance range, and wherein the component (2) is assessed as being "OK".

7. On-wing inspection method according to claim 5, wherein after repeating steps a) to c), the evaluation (210) comprises determining that the deviation is outside a permissible tolerance range, and wherein the device is opened and the component (2) is subjected to a materialographic examination.

8. On-wing inspection method according to claim 6, wherein after repeating steps a) to c), the evaluation (210) comprises determining that the deviation is within a permissible tolerance range, and wherein a component region (22, 24, 26, 28) inaccessible to a probe of the borescope is "OK".

9. On-wing inspection method according to any of the preceding claims, wherein the relevant testing method (130, 200) is calibrated on reference components.

10. System comprising computer unit (32) and probe (31), which is designed to carry out an on-wing inspection method (1) according to any of the preceding claims.

11. System comprising computer unit (32) and probe (31) according to claim 10, wherein the probe (31) has a pincer-shaped design with several members (36), wherein a main sensor (37) is arranged centrally on the probe (31).

12. System comprising computer unit (32) and probe (31) according to claim 11, wherein the lateral members (36) have additional sensors in the form of rigid or movable probes (38).

13. System comprising computer unit (32) and probe (31) according to any of claims 10 to 12, wherein the probe (31) is designed to be movable and exchangeable.

14. System comprising computer unit (32) and probe (31) according to any of claims 10 to 13, wherein the probe (31) is arranged on a flexible, rigid or stiffenable probe guide (34) with integrated signal and/or control lines (33) which connect the probe (31) in particular to the computer unit (32).

15. System comprising computer unit (32) and probe (31) according to claim 14, wherein a pivotable connection device (35) is provided for connecting the probe (31) to the probe guide (34).

16. System comprising computer unit (32) and probe (31) according to claim 15, wherein cameras (39) are provided on the connection device (35).

## Revendications

1. Procédé d'inspection sur l'aile (1) permettant de vérifier rapidement un état d'aubes non visibles de l'extérieur d'un moteur d'aéronef avec un boroscope, comportant les étapes consistant à:
a. appliquer un procédé de contrôle non destructif (130, 200) dans lequel une propriété physique d'au moins une zone de composant (22, 24, 26, 28) est détectée,
b. mettre en œuvre une comparaison (140) entre une valeur physique réelle détectée par le procédé de contrôle non destructif (130, 200) et une valeur physique de référence de la zone de composant (22, 24, 26, 28), qui est lue dans une base de données (105) et dans laquelle un vieillissement du composant (2) est pris en compte,
c. évaluer (150, 210) un écart entre la valeur réelle et la valeur de référence.

2. Procédé d'inspection sur l'aile selon la revendication 1, dans lequel, lors du procédé de contrôle (130, 200), la zone de composant (22, 24, 26, 28) est exposée à un champ de micro-ondes, à un champ d'ultrasons, à des rayons X ou à un courant de Foucault, une analyse thermographique, des analyses de vibrations et de résonance ou une mesure de conductivité est mise en œuvre.

3. Procédé d'inspection sur l'aile selon la revendication 1 ou 2, dans lequel l'évaluation (150) comprend une constatation que l'écart se situe dans un champ de tolérance admissible, et dans lequel le composant (2) est jugé « en ordre ».

4. Procédé d'inspection sur l'aile selon la revendication 1 ou 2, dans lequel l'évaluation (150) comprend une constatation que l'écart se situe en dehors d'un champ de tolérance admissible, et dans lequel le composant (2) est soumis à un examen matérialographique destructif.

5. Procédé d'inspection sur l'aile selon la revendication 1 ou 2, dans lequel l'évaluation (150) comprend une constatation que l'écart se situe à l'intérieur d'un champ de tolérance admissible, et dans lequel les étapes a) à c) sont répétées au moins une fois avec un procédé de contrôle non destructif (200) d'un autre type pour l'au moins une zone de composant (22, 24, 26, 28) précédemment contrôlée.

6. Procédé d'inspection sur l'aile selon la revendication 5, dans lequel, après avoir mis en œuvre à nouveau les étapes a) à c), l'évaluation (210) comprend une constatation que l'écart se situe à l'intérieur d'un champ de tolérance admissible, et dans lequel le composant (2) est jugé « en ordre ».

7. Procédé d'inspection sur l'aile selon la revendication 5, dans lequel, après avoir mis en œuvre à nouveau les étapes a) à c), l'évaluation (210) comprend une constatation que l'écart se situe en dehors d'un champ de tolérance admissible, et dans lequel le dispositif est ouvert et le composant (2) est soumis à un examen matérialographique.

8. Procédé d'inspection sur l'aile selon la revendication 6, dans lequel, après avoir mis en œuvre à nouveau les étapes a) à c), l'évaluation (210) comprend une constatation que l'écart se situe dans un champ de tolérance admissible, et dans lequel une zone de composant (22, 24, 26, 28) inaccessible à une tête de contrôle du boroscope est « en ordre ».

9. Procédé d'inspection sur l'aile selon l'une des revendications précédentes, dans lequel le procédé de contrôle (130, 200) respectif est étalonné sur des composants de référence.

10. Système comportant une unité de calcul (32) et une tête de contrôle (31), qui est conçu pour mettre en œuvre un procédé d'inspection sur l'aile (1) selon l'une des revendications précédentes.

11. Système comportant une unité de calcul (32) et une tête de contrôle (31) selon la revendication 10, dans lequel la tête de contrôle (31) comprenant une réalisation en forme de pince avec plusieurs organes (36), dans lequel un capteur principal (37) est disposé au centre de la tête de contrôle (31).

12. Système comportant une unité de calcul (32) et une tête de contrôle (31) selon la revendication 11, dans lequel les organes latéraux (36) présentent des capteurs supplémentaires sous la forme de têtes de contrôle (38) construites de manière fixe ou mobile.

13. Système comportant une unité de calcul (32) et une tête de contrôle (31) selon l'une des revendications 10 à 12, dans lequel la tête de contrôle (31) est construite mobile et interchangeable.

14. Système comportant une unité de calcul (32) et une tête de contrôle (31) selon l'une des revendications 10 à 13, dans lequel la tête de contrôle (31) est disposée sur un guide de tête de contrôle (34) flexible, rigide ou rigidifiable avec des lignes de signal et/ou de commande (33) intégrées qui relient la tête de contrôle (31) en particulier à l'unité de calcul (32).

15. Système comportant une unité de calcul (32) et une tête de contrôle (31) selon la revendication 14, dans lequel un dispositif de raccordement (35) pivotant est prévu pour le raccordement de la tête de contrôle (31) au guide de tête de contrôle (34).

16. Système comportant une unité de calcul (32) et une tête de contrôle (31) selon la revendication 15, dans lequel des caméras (39) sont prévues sur le dispositif de raccordement (35).
